# EUROPEAN PATENT SPECIFICATION

(11) **EP 4 211 073 B1**
(45) Date of publication and mention of the grant of the patent: **30.10.2024**
(21) Application number: 21769227.6
(22) Date of filing: 13.08.2021
(51) Int. Cl.: C01B 17/48, C01B 17/54, C01B 17/76, C01B 17/80

(54) **SYSTEM AND METHOD FOR PRODUCING SULFUR DIOXIDE AND ASSOCIATED SULFURIC ACID PLANT**
SYSTEM UND VERFAHREN ZUR HERSTELLUNG VON SCHWEFELDIOXID UND ZUGEHÖRIGE SCHWEFELSÄUREANLAGE
SYSTÈME ET PROCÉDÉ DE PRODUCTION DE DIOXYDE DE SOUFRE ET INSTALLATION D'ACIDE SULFURIQUE ASSOCIÉE

(30) Priority: 09.09.2020 US 202063076165 P
(43) Date of publication of application: 19.07.2023
(73) Proprietor: Chemetics Inc., Vancouver, British Columbia V5M 0A5 (CA)
(72) Inventor: DIJKSTRA, Rene, Vancouver, British Columbia V7K 2G4 (CA); KIDON, Dominika, Burnaby, British Columbia V5C 0C3 (CA)
(74) Representative: Beyer, Andreas
(86) International application number: PCT/US2021/045989
(87) International publication number: WO 2022/055662

(56) References cited:
- CA-A1- 3 021 202
- US-A- 4 046 867
- SCHENDEL R L: "SO2-GENERATION PROCESS CAN DOUBLE REFINERY CLAUS UNIT CAPACITY", OIL AND GAS JOURNAL, PENNWELL, HOUSTON, TX, US, vol. 91, no. 39, 27 September 1993 (1993-09-27), pages 63 - 66, XP000371904, ISSN: 0030-1388

## Description

### Technical Field

The present invention pertains to improved systems and methods for producing SOz and to use thereof in plants for producing H₂SO₄.

### Background

Sulfur dioxide is a commonly produced industrial chemical for use as a reactant in various other chemical processes. It is produced in both pure SOz gas and/or liquefied SOz form for sale and as a gas mixture for use in downstream processes. A major industrial application for sulfur dioxide is in the production of sulfuric acid which is one of the most produced commodity chemicals in the world and is widely used in the chemical industry and commercial products.

Nowadays, the contact process is the primary process used to produce sulfuric acid commercially (developed in 1831 by P. Phillips). Typically, this involves obtaining a supply of sulfur dioxide by combusting a supply of sulfur with ambient air and then oxidizing the sulfur dioxide with oxygen in the presence of a catalyst (typically vanadium oxide) to accelerate the reaction in order to produce sulfur trioxide. The reaction of sulfur dioxide to sulfur trioxide is reversible and exothermic and it is important to appropriately control the temperature of the gases over the catalyst in order to achieve the desired conversion without damaging the contact apparatus which comprises the catalyst.

The produced sulfur trioxide is then converted to sulfuric acid by absorption into a concentrated sulfuric acid solution with subsequent water addition to the now more concentrated acid to maintain the acid concentration. This indirect reaction of the sulfur trioxide with water avoids the consequences of directly dissolving sulfur trioxide into water which is a highly exothermic reaction. The absorbing of the sulfur trioxide is usually done in one or more absorption towers.

Distributors are used in the absorption towers to distribute strong sulfuric acid solution across the top of a packed bed within the tower. Sulfur trioxide gas flows through the tower in generally countercurrent flow to the solution, but it can also flow co-currently. The strong sulfuric acid solution is used to absorb the flowing sulfur trioxide. In CA2802885, an improved energy efficient system was disclosed for producing sulfuric acid that employs an intermediate absorption subsystem comprising a spray tower, an energy recovery subsystem, and an intermediate absorption tower comprising a packed bed. This and similar systems are commercially available under the trade-mark ALPHA^{™}.

In WO2008/052649, a process was disclosed for the continuous catalytic complete or partial oxidation of a starting gas containing from 0.1 to 66% by volume of sulfur dioxide plus oxygen, in which the catalyst is kept active by means of pseudoisothermal process conditions with introduction or removal of energy. The related apparatus is for the continuous catalytic complete or partial oxidation of a starting gas containing sulfur dioxide and oxygen, and is characterized by at least one tube contact apparatus which is an upright heat exchanger composed of at least one double-walled tube whose catalyst-filled inner tube forms a reaction tube, with heat being transferred cocurrently around the reaction tube and an absorber for separating off SO₃ being installed downstream of the tube contact apparatus. The reactivity of the catalyst is preset by mixing with inert material. This process and apparatus are commercially available under the trade-mark CORE^{™}.

Large volumes of sulfuric acid are required to produce phosphate based fertilizer. Large companies exist in the industry that are located in areas with an abundance of phosphate rock and which employ large integrated fertilizer complexes for the production thereof. Outputs between 4000 and 5000 mtpd now come from such sulfuric acid plants and as the plants continue to become larger, it is getting uneconomic to fabricate the converters, absorbing towers and gas-gas exchangers involved. The result is that multiple sulfuric acid plants are required to meet the increasing demand.

To address this problem, sulfuric acid plants and processes have recently been disclosed that practically allow for capacities in excess of 10,000 mtpd. For example, this technology is disclosed in Canadian patent application CA3021202 titled Sulfuric Acid Plant and published Dec. 24, 2018 and also The "MEGA" Sulphuric Acid Plant, by R. Dijkstra, Chemetics Inc., Vancouver, BC, Canada, Presented at Sulphur 2018 International Conference & Exhibition (Gothenburg 5-8 November 2018). Here, sulfur is combusted to sulfur dioxide using oxygen instead of air and using submerged combustion to manage the heat which is generated. The design offers lower capital expenditure as well as enhanced energy recovery.

Schendel (SCHENDEL R L: "SO2-GENERATION PROCESS CAN DOUBLE REFINERY CLAUS UNIT CAPACITY",OIL AND GAS JOURNAL, PENNWELL, HOUSTON, TX, US, vol. 91, no. 39, 27 September 1993 (1993-09-27), pages 63-66) discloses a SO2-generation process by the submerged combustion method, wherein oxygen is released below the surface of boiling sulfur. Generated SO2 and sulfur vapor are directed to a condenser and the liquid sulfur is redirected to to the sulfur vessel, while SO2 is released and further treated.

US 4 046 867 A discloses a plant and method for producing SO2.

Notwithstanding that the use of oxygen instead of air has long been considered to combust sulfur to sulfur dioxide (e.g. EP2330075 & EP2507164) historically, commercial sulfur burning, sulfuric acid plants have always used ambient air as the source of the oxygen required in the process. The use of ambient air is inexpensive and the conventional process operating at approximately 11-12 vol% SOz into the converter perfectly balances the O₂: SO₂ ratio required for high conversion and the maximum allowable temperature in the first catalyst bed. The disadvantage of using air is that each required molecule of oxygen also comes with approximately four molecules of inert gas (mainly N₂ and argon) which must also flow through the plant, therefore requiring very large equipment to handle to entire gas flow.

In the sulfuric acid plants disclosed in the aforementioned CA3021202, submerged combustion is primarily used to produce sulfur dioxide. However, due to the relatively low latent heat of sulfur, a large amount of sulfur is evaporated from the combustion bath along with the sulfur dioxide vapour produced (approx. 23 kg sulfur vapour for every kg of sulfur reacted to sulfur dioxide). Thus, large gas volumes have to be handled and the substantial amount of sulfur vapour present practically must be recovered, along with associated heat energy, using a sulfur condensing step in a sulfur condenser. In this sulfur condensing step, sulfur is recovered as liquid sulfur and the remaining gas mixture consists mainly of sulfur dioxide and a now modest amount of residual sulfur vapour. This modest amount of residual sulfur vapour then undergoes a secondary combustion to essentially convert it all to sulfur dioxide too. (Secondary combustion techniques for the combustion of sulfur to sulfur dioxide have long been known to those skilled in the art; e.g. as disclosed in US3803298.)

The sulfur condenser in such plants needs to operate at either high or low temperature to avoid operating at the viscosity peak for sulfur at 170°C (e.g. as discussed in US5204082). Operation of the sulfur condenser at temperatures below the viscosity peak temperature only allows recovery of low grade energy in the form of low pressure steam and/or hot water which is undesirable given the large quantity of energy available. Operating the sulfur condenser at temperatures above the viscosity peak temperature allows useful energy to be recovered (e.g. 40 barg steam), but in this case not all sulfur vapor is condensed and even at the expected operating temperature of 275 - 300°C, the condensed liquid sulfur has undesirably high viscosity. This makes the sulfur more difficult to condense and because the condensed sulfur liquid flows slowly, oversized piping is required. Thus, the sulfur condensing step is relatively complex and the associated sulfur condenser is a relatively large and expensive piece of equipment. It is therefore highly desirable to reduce the amount of sulfur that must be condensed and recovered.

The chemistry of sulfur is quite complex and numerous allotropes can exist in molecules which differ in both the arrangement of atoms and the number of atoms. Under common or standard conditions, sulfur is a solid material and forms molecules with 8 sulfur atoms, i.e. S₈. However, allotropes Sₙ are known to exist in the liquid and vapor phase in which n can range from 1 to 8 and even higher. The allotrope diagram for sulfur is complex and the thermodynamic properties of each allotrope differs. Additionally, the conversion between the various allotropes either requires or releases energy. For simplicity, in developing and engineering chemical processes and equipment involving sulfur, the presence of various sulfur allotropes - other than the primary allotrope involved - and the various differences in their associated properties are frequently not taken into account in their entirety.

There remains a desire for continual improvement in plant design and operation for the production of sulfur dioxide, and particularly for the efficient and cost-effective production of ever larger volumes of sulfuric acid therefrom. The present invention addresses this desire and provides other benefits as disclosed below.

### Summary

In the production of sulfur dioxide using submerged combustion and pure oxygen or oxygen enriched air as a reactant, it has been discovered that a very substantial reduction in the amount of sulfur vapour needing to be condensed can be achieved, along with a significant improvement in energy recovery, by incorporating an additional vapour phase combusting step and taking advantage of the types, amounts, and properties of the various sulfur allotropes involved.

Specifically, an inventive system for the production of sulfur dioxide gas comprises a submerged combustion reactor, a vapour phase combustion chamber, and apparatus for cooling a gas and for condensing sulfur vapor into liquid sulfur. The submerged combustion reactor is for the combustion of molten sulfur to sulfur dioxide and comprises an inlet for a supply of molten sulfur, an inlet for a supply of oxygen at ≥ 90% purity by volume, an inlet for condenser sulfur, and an outlet. The vapour phase combustion chamber is for the combustion of sulfur vapour to sulfur dioxide and comprises an inlet connected to the outlet of the submerged combustion reactor, an inlet for a supply of oxygen at ≥ 90% purity by volume, and an outlet. The apparatus for cooling a gas and for condensing sulfur vapor into liquid sulfur comprises an inlet connected to the outlet of the vapour phase combustion chamber, an outlet for liquid sulfur connected to the condensed sulfur inlet of the submerged combustion reactor, and an outlet for a gas mixture comprising sulfur dioxide and residual sulfur vapour.

In general, the apparatus for cooling a gas and for condensing sulfur vapor into liquid sulfur may involve a single piece of equipment that can accomplish both functions (e.g. in smaller systems). More typically however, the two functions would be accomplished in separate processing components, namely a heat exchanger for cooling a gas and a sulfur condenser for condensing sulfur vapour into liquid sulfur. In such a case, the heat exchanger comprises the inlet connected to the outlet of the vapour phase combustion chamber, and an outlet. The sulfur condenser comprises an inlet connected to the outlet of the heat exchanger, the outlet for liquid sulfur connected to the condensed sulfur inlet of the submerged combustion reactor, and the outlet for a gas mixture comprising sulfur dioxide and residual sulfur vapour.

The aforementioned system advantageously may successfully employ a smaller sulfur condenser than that in the prior art. For instance, the sulfur condenser can be sized to condense less than 10 times the mass of molten sulfur supplied to the submerged combustion reactor. As a further advantage, due to the higher temperatures in the heat exchanger more energy is recovered at high temperature thus making the recovered energy more valuable.

The sulfur dioxide production system may be used to produce sulfur dioxide gas or liquefied sulfur dioxide for a variety of purposes in which case a further sulfur condenser operating at low temperature is required to remove the residual sulfur vapor from the sulfur dioxide gas. It is however particularly suitable for use in a sulfuric acid plant, and more particularly a single contact, single absorption sulfuric acid plant. Generally, such a sulfuric acid plant comprises the aforementioned sulfur dioxide production system, a secondary combustion chamber, a contact apparatus, and an absorption system. The secondary combustion chamber is for the combustion of residual sulfur vapour to sulfur dioxide and comprises an inlet connected to the outlet of the sulfur condenser for the gas mixture, an inlet for an oxygen containing gas (preferably oxygen at >90% purity but any oxygen containing gas including air could be used), and an outlet for process gas consisting essentially of sulfur dioxide and oxygen. The contact apparatus is for converting sulfur dioxide to sulfur trioxide and comprises an inlet connected to the process gas outlet of the secondary combustion chamber and an outlet for sulfur trioxide. The absorption system is for converting sulfur trioxide to sulfuric acid and comprises an inlet connected to the sulfur trioxide outlet of the contact apparatus, and an outlet for sulfuric acid.

A suitable contact apparatus for the sulfuric acid plant is a tubular reactor cooled by molten salt. Optionally, the submerged combustion reactor, the vapour phase combustion chamber, and the secondary combustion chamber may share a common supply of oxygen at ≥ 90% purity by volume.

The secondary combustion chamber in the instant sulfuric acid plant can desirably comprise an inlet for recycle gas from the absorption system wherein the recycle gas comprises sulfur dioxide, oxygen and accumulated inert gases. The secondary combustion chamber can thus simultaneously reheat the recycle gas without the need for additional heat exchangers.

In the associated method of the invention, sulfur dioxide is produced by combusting molten sulfur with oxygen at > 90% purity by volume using submerged combustion to produce a first gas mixture comprising sulfur dioxide and sulfur vapour comprising molecules of sulfur Sₙ wherein n≥2, then vapour phase combusting the sulfur vapour in the first gas mixture with oxygen or oxygen enriched air to produce a second gas mixture comprising sulfur dioxide and sulfur vapour in which the concentrations of sulfur dioxide and sulfur vapour in the second gas mixture are greater and less respectively than the concentrations in the first gas mixture, then cooling the second gas mixture to produce a third gas mixture comprising sulfur dioxide and sulfur vapour, and then condensing sulfur vapour into liquid sulfur from the third gas mixture to produce a fourth gas mixture comprising sulfur dioxide and residual sulfur vapour. The method is characterized in that the average number n_{average} of the sulfur atoms in the sulfur molecules in the second gas mixture is at least 20% lower than the n_{average} of the sulfur atoms in the sulfur molecules in the first gas mixture.

In a desirable exemplary method of the invention, the average number n_{average} of the sulfur atoms in the sulfur molecules in the second gas mixture is more than 50% lower than the n_{average} of the sulfur atoms in the sulfur molecules in the first gas mixture.

In the method, the cooling step can be performed at a temperature above the dewpoint of sulfur and the cooling can remove more than 50% of the energy released during the combustion of sulfur in the submerged combustion and vapour phase combusting steps.

In a representative embodiment, 30 to 50% of the total oxygen combusted in the submerged and vapour phase combusting steps is combusted in the submerged combusting step and 50 to 70% of the total oxygen is combusted in the vapour phase combusting step.

In other representative embodiments, the average number of sulfur atoms of the Sₙ molecules for all n ≥ 2 in the first gas mixture can be in the range from 6.4 to 7.0. Further, the average number of sulfur atoms of the Sₙ molecules for all n ≥ 2 in the second gas mixture can be in the range from 2.1 to 3. Further still, the average number of sulfur atoms of the Sₙ molecules for all n ≥ 2 in the third gas mixture can be in the range from 6.4 to 7.0.

In yet other representative embodiments, the temperature of the first gas mixture can be in the range from 440 to 500 °C. Further, the temperature of the second gas mixture can be in the range from 650 to 700 °C. Further still, the temperature of the third gas mixture can be in the range from 400 to 475 °C.

As mentioned above, the invention may be used to produce sulfur dioxide gas or liquefied sulfur dioxide for numerous purposes, but is particularly suitable for use in producing sulfuric acid in a sulfuric acid plant. In such an embodiment sulfur dioxide is produced according to the aforementioned method, after which conventional steps for producing sulfuric acid therefrom may be employed.

### Brief Description of the Drawings

Figure 1a is a schematic of an improved SCSA (single contact, single absorption) sulfuric acid plant recently disclosed in the art (e.g. CA3021202) in which sulfur is combusted to sulfur dioxide using oxygen and submerged combustion.
Figure 1b is a schematic showing the primary combustion part of the SOz production system in the SCSA of Figure 1a.
Figure 1c is a schematic showing the secondary part of the SOz production system in the SCSA of Figure 1a.
Figure 2 is a schematic showing the primary combustion part of the SOz production system in a system of the invention.
Figure 3 compares the actual temperature of the gas mixture during the submerged and vapour phase combusting steps of Inventive example 1 to the expected temperature if only the S₈ allotrope were present in the mixture.

### Detailed Description

Unless the context requires otherwise, throughout this specification and claims, the words "comprise", "comprising" and the like are to be construed in an open, inclusive sense. The words "a", "an", and the like are to be considered as meaning at least one and are not limited to just one.

The words "oxygen" or "pure oxygen" are to be considered as meaning oxygen in concentrations equal to or exceeding 90% by volume.

Herein, the average number n_{average} of the sulfur atoms in the sulfur molecules in a given gas mixture is defined as the sum of all sulfur atoms contained in the sulfur molecules in the gas mixture divided by the total moles of sulfur in the gas mixture.

The trade-marks CORE-S^{™} and CORE-SO2^{™} refer to the molten salt cooled tubular reactor and the processes of the invention respectively.

The present invention represents a significant improvement to the sulfur dioxide generation portion of the system and methods disclosed in CA3021202. While this disclosure was directed specifically to use in sulfuric acid production plants, the sulfur dioxide generation portion may instead be employed to generate pure SOz gas or liquefied SOz (by condensing the SOz in the gas mixture in a SOz liquefaction system) directly for sale or for use in other applications. (Note: a difference between use for sulfuric acid production is that not all sulfur content of the gas has to be removed in this application, for instance being allowed to contain up to 10-20 mol% sulfur (expressed as S₁), whereas for use as pure SOz or liquefied SOz, cooling to a lower temperature to condense all sulfur, e.g. to < 1 mole% sulfur (expressed as S₁) from the gas would typically be required.)

In the submerged combustion step of molten sulfur with oxygen, it has been discovered that the significant presence of the variety of sulfur allotropes in the gas mixture produced can be advantageously used to reduce the ultimate amount of sulfur that needs to be condensed in the process and also to simplify and improve energy recovery in the process. This is a consequence of the amounts and thermodynamic properties of the different sulfur allotropes present.

In the primary combustion stage of the process involving submerged combustion, all the oxygen supplied is consumed and excess sulfur remains in the gas mixture produced. In the prior art process where the entire primary combustion is accomplished by submerged combustion, a gas mixture comprising sulfur dioxide and sulfur gases is created with a very large relative amount of sulfur vapour (approximately 7-9 kg sulfur vapour for every kg of sulfur dioxide formed). It was realized that if an initial portion of the supplied oxygen were used to generate this mixture, the additional remaining portion of oxygen could be used to convert part of the sulfur in the vapour to SOz (while still consuming all the supplied oxygen), while at the same time the reaction energy from the vapour phase combustion of sulfur to SOz would be taken up by the gas mixture. This energy would be used to convert S₈ allotrope molecules to four S₂ molecules and in a like manner convert other n > 2 sulfur allotropes to S₂ (e.g. S₆ molecules to three S₂ molecules). This conversion of the sulfur molecules results in a much lower gas temperature rise than would otherwise be expected due to the endothermic nature of the conversion of larger sulfur molecules into multiple smaller sulfur molecules and thus most of the total oxygen used in the primary combustion stage can actually be used in the vapour phase combusting step rather than in the submerged combusting step. Having a large portion of the associated energy in the hot gas mixture then readily allows this energy to be recovered at a high temperature (via a conventional heat exchanger) without having to condense sulfur which is not only more complicated but also only allows energy to be recovered at lower temperature. Consequently, a significantly smaller amount of sulfur needs to be condensed and smaller amount of energy has to be recovered from the condensing sulfur allowing the sulfur condenser to be sized significantly smaller than in the prior art. In the preferred embodiment of the invention less than 3 kg of sulfur is condensed for every kg sulfur dioxide produced

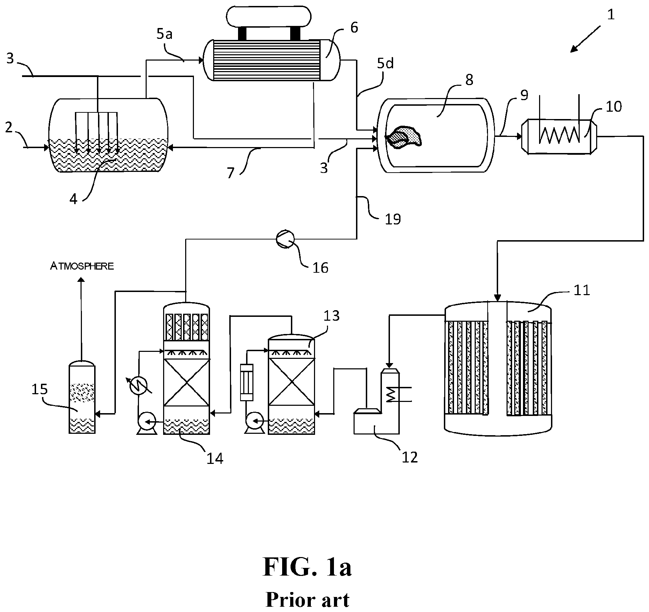

Figure 1a shows a schematic of a prior art SCSA (single contact, single absorption) sulfuric acid plant recently disclosed in CA3021202. Here, overall improvements were obtained by combusting sulfur to sulfur dioxide using oxygen and submerged combustion. In part to meet the increased demand of major fertilizer producers throughout the world, such sulfuric acid plant designs allowed for single train capacities in excess of 10,000 mtpd with lower capital expenditure as well as enhanced energy recovery. The use of pure oxygen and submerged combustion provide advantages including: the gas volume involved is reduced and hence the equipment size by more than 70%; a main blower is not required since oxygen is received under pressure, thereby saving power; a drying tower system is eliminated since the supplied oxygen contains no moisture; low temperature submerged combustion allows for all-metal construction; high conversion can be achieved in a single pass; being a single absorption design, no reheat exchangers nor secondary absorption system are required; and enhanced energy recovery is obtained thereby producing more steam.

In SCSA plant 1 of Figure 1a, molten sulfur 2 and pure oxygen 3 (> 90% purity by volume) are supplied to submerged combustion reactor 4 and undergo a primary (submerged) combustion therein. Gas mixture 5a comprising sulfur dioxide and sulfur vapour is produced and is directed to sulfur condenser 6. Sulfur vapour in gas mixture 5a is condensed and removed therefrom as mixture 7 (comprising condensed liquid sulfur and a modest amount of sulfur dioxide). The resulting gas mixture 5d comprising sulfur dioxide and residual sulfur vapour is directed to secondary combustion chamber 8. An additional amount of pure oxygen 3 is also supplied to secondary combustion chamber 8 and undergoes a secondary combustion with the residual sulfur in gas mixture 5d. Essentially all residual sulfur vapour is reacted (combusted) to produce process gas 9 suitable for the contact process.

The remaining components shown in Figure 1a and their relative configuration in SCSA plant 1 are well known in the art and only discussed briefly here. As shown, process gas 9 is directed to superheater 10 where it is cooled prior to conversion to sulfur trioxide in contact apparatus 11 (e.g. a CORE-S^{™} tubular reactor cooled by molten salt). The produced sulfur trioxide is directed to economizer 12, then to optional hot absorption system 13, and then to cold absorption system 14 in which sulfur trioxide is absorbed in sulfuric acid to produce more concentrated sulfuric acid product. SCSA plant 1 also comprises purge gas cleaning unit 15 (in which a small amount of gas, essentially containing all the inert gases that enter the system with the oxygen are removed to prevent their accumulation) and SOz blower 16 (which recycles unreacted SOz and Oz gas obtained from cold absorption system 14 for further conversion to sulfur trioxide). As mentioned, the schematic of SCSA plant 1 of Figure 1a has been simplified to focus on the main components and systems involved. However, those skilled in the art are aware that numerous other components and interconnections can, and typically are, included in practical plants. For instance, a heat exchanger (e.g. a boiler, economizer, or gas-gas exchanger) may be employed upstream of contact apparatus 11 to cool the gases to its required inlet temperature. Further, contact apparatus 11 also typically has an outlet (not shown) for any unconverted sulfur dioxide gas and oxygen. Further still, absorption systems 13, 14 also typically have an outlet (not shown) for unabsorbed gases (e.g. sulfur dioxide, oxygen, inert gases)

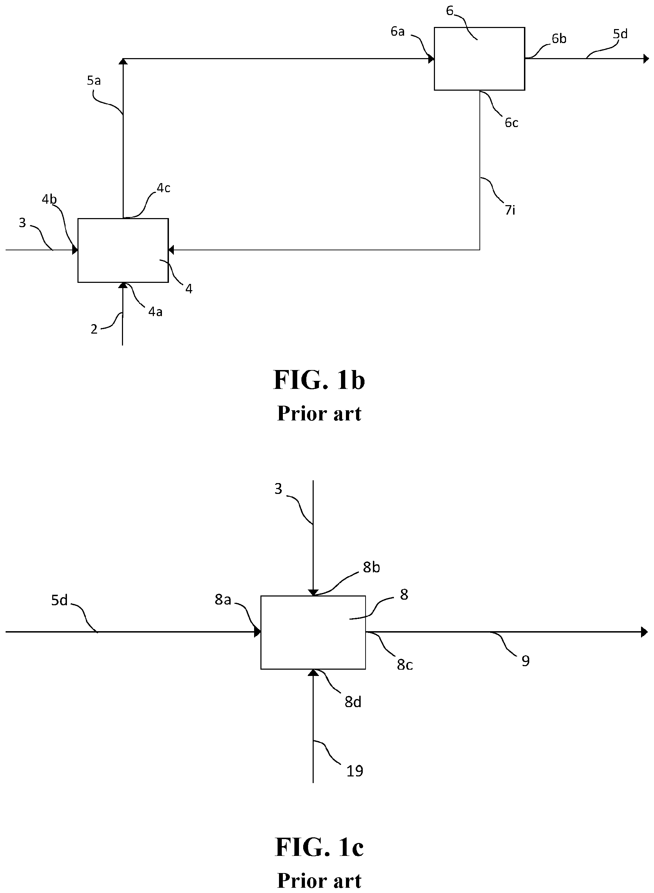

The schematics in Figures 1b and 1c are directly solely to the SOz production system in SCSA plant 1 and show the primary and secondary combustion parts respectively. In Figure 1b, molten sulfur 2 and pure oxygen 3 (> 90% purity by volume) are shown supplied to submerged combustion reactor 4 at inlets 4a and 4b respectively and undergo a primary (submerged) combustion therein. Gas mixture 5a comprising sulfur dioxide and sulfur vapour is produced and is directed from outlet 4c to inlet 6a of sulfur condenser 6. Sulfur vapour in gas mixture 5a is condensed and removed therefrom in mixture 7i (which comprises condensed liquid sulfur and a modest amount of dissolved sulfur dioxide) at outlet 6c. The resulting gas mixture 5d comprising sulfur dioxide and residual sulfur vapour is obtained from outlet 6b and directed to a secondary combustion stage.

In Figure 1c, gas mixture 5d from sulfur condenser 6 is directed to inlet 8a of secondary combustion chamber 8. Although any oxygen containing gas may be used in the secondary combustion, conveniently pure oxygen 3 is also supplied to secondary combustion chamber 8 at inlet 8b. The residual sulfur vapour in gas mixture 5d undergoes secondary combustion with the supplied oxygen, essentially to completion, to produce SOz process gas 9 which is obtained from outlet 8c. Recycle gas 19 from cold absorption system 14 is also seen here being supplied to secondary combustion chamber 8 at inlet 8d.

While SCSA plant 1 provides many advantages, undesirably a substantial amount of sulfur vapour needs to be condensed in sulfur condenser 6.

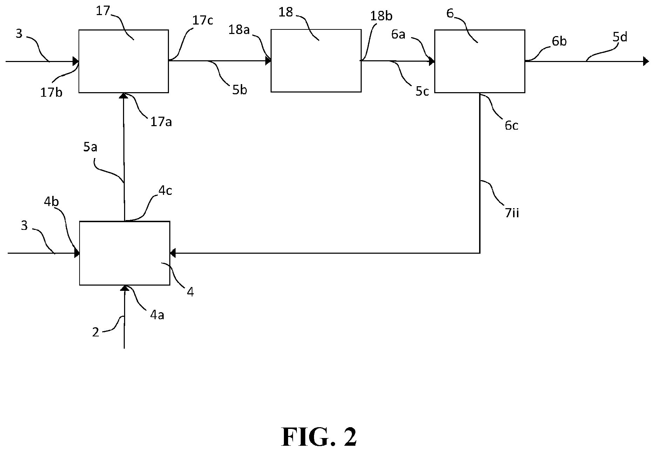

A SCSA plant of the invention is next illustrated in the schematic of Figure 2. With the exception of the primary combustion part of the plant, everything else about the inventive SCSA plant can be the same as that shown in Figure 1a. Thus, Figure 2 only shows the primary combustion part of the inventive SCSA plant and the differences between it and the prior art are readily apparent (e.g. by comparing Figure 2 to Figure 1b).

As is evident from Figure 2, the primary combustion part differs from Figure 1b in that vapour phase combustion chamber 17 and heat exchanger 18 have been incorporated. Molten sulfur 2 and pure oxygen 3 are again supplied to submerged combustion reactor 4 at inlets 4a and 4b respectively and undergo a primary (submerged) combustion therein. First gas mixture 5a comprising sulfur dioxide and sulfur vapour is again produced but this time is directed from outlet 4c to inlet 17a of vapour phase combustion chamber 17. Pure oxygen 3 is also supplied to vapour phase combustion chamber 17 at inlet 17b and further primary vapour phase combustion takes place therein. Second gas mixture 5b is obtained from outlet 17c and comprises significantly more SOz and greater amounts of S allotropes in which n is less than about 5. Second gas mixture 5b is directed to heat exchanger 18 at inlet 18a whereupon it is cooled and output as cooler third gas mixture 5c from outlet 18b. (In Figure 2, heat exchanger 18 is depicted as a single component, but cooling may for instance be accomplished in one or more stages using one or more units.) Third gas mixture 5c is next directed to inlet 6a of sulfur condenser 6 where sulfur vapour is condensed and removed therefrom in mixture 7ii at outlet 6c. The resulting fourth gas mixture 5d here is obtained from outlet 6b and directed to the secondary combustion stage.

Comparing Figure 2 to 1b, the amounts of sulfur and total oxygen supplied in the overall primary combustion steps can be the same. Further, the gas mixtures 5d being forwarded along to secondary combustion in each case can be the same. However, much less sulfur vapor needs to be condensed and returned from sulfur condenser 6 in the inventive embodiment of Figure 2 than in the prior art embodiment in Figure 1b. Further, a substantial amount of heat energy for use elsewhere in the plant can readily be obtained from heat exchanger 18. This is illustrated in detail in the following Examples.

In embodiments of the invention, any known or conventional vapour phase combustion chamber types may be considered for use as vapour phase combustion chamber 6. Further, any known or conventional gas-gas (e.g. steam superheater) or gas-liquid (e.g. steam boiler or molten salt cooler) heat exchangers may be considered for use as heat exchanger 18. In other embodiments however, the function of the heat exchanger 18 and sulfur condenser 6 can be carried out in a single, integrated piece of equipment. Further still, the various supplies of pure oxygen can be obtained from a common supply (e.g. a vacuum swing absorption unit, typically 90-93% purity, or a cryogenic air separation unit, typically > 98% purity, are likely sources) or alternatively more than one supply may be considered.

A characteristic of the present invention is that the apparatus and operation results in the average number n_{average} of the sulfur atoms in the sulfur molecules in the second gas mixture 5b being at least 20% lower than the n_{average} of the sulfur atoms in the sulfur molecules in the first gas mixture 5a. More particularly, the average number n_{average} of the sulfur atoms in the sulfur molecules in the second gas mixture 5b may be more than 50% lower than the n_{average} of the sulfur atoms in the sulfur molecules in the first gas mixture 5a. Further, sulfur condenser 6 can be sized smaller than that used in the prior art, e.g. sized to condense less than 10 times the mass of molten sulfur supplied to the submerged combustion reactor.

In the operation of the SOz production system of the invention, the cooling performed in heat exchanger 18 may preferably be carried out at a temperature above the dewpoint of sulfur and such cooling can remove more than 50% of the energy released during the combustion of sulfur in the submerged combustion and vapour phase combusting steps.

In the representative embodiments shown in the Figures and in the following Examples, it is seen that 30 to 50% of the total oxygen combusted in the submerged and vapour phase combusting steps can be combusted in the submerged combusting step and 50 to 70% of the total oxygen can be combusted in the vapour phase combusting step. Further, the average number of sulfur atoms of the Sₙ molecules for all n ≥ 2 in the first, second, and third gas mixtures can be in the ranges from 6.4 to 7.0, 2.1 to 3, and 6.4 to 7.0 respectively. Further still, the temperature of the first gas mixture can be in the range from 440 to 500 °C, the temperature of the second gas mixture can be in the range from 650 to 700 °C, and the temperature of the third gas mixture can be in the range from 400 to 450 °C.

However, those of ordinary skill will appreciate that the amounts, temperatures, and desired operating conditions (such as operating pressure) may need to be modified somewhat in accordance with differing situations and plant apparatus. It is expected however that those of ordinary skill will be able to make such modifications using the disclosed teachings and the following Examples for guidance.

In general terms, a main advantage of using submerged combustion using enriched air or pure oxygen at >90% concentration is that the temperature of the combustion products are limited to the boiling point of sulfur (e.g. -450 °C at 0.5 barg & ~575°C at 4 barg). However, due to the relatively low latent heat of sulfur, a large amount of sulfur is evaporated from the bath resulting in large gas volumes that have to be handled. Thus, large amounts of sulfur need to be condensed from the SOz gas before it is sent for further use. The sulfur condenser in the system needs to operate at either high or low temperature to avoid the sulfur viscosity peak at 170°C, but even at the expected operating temperature of 275 - 300°C, the condensed liquid sulfur has high viscosity. This makes the sulfur more difficult to condense and the condensed sulfur liquid flows slowly requiring oversized pipes.

Additionally, for larger plant capacities the large amounts of oxygen gas that must be distributed into the molten salt bath require large equipment to ensure good gas/liquid contact. Existing submerged sulfur combustion systems have been limited to approx 50 tpd sulfur capacity. To meet the larger demand for sulfuric acid, capacities of up to 3000 tpd sulfur are foreseen. The present invention addresses this in part by accomplishing some of the combusting in the vapour phase instead of via submerged combustion. Advantage is taken of the fact that at low temperatures, most of the sulfur vapour exists in the form of S₆, S₇ and S₈ molecules whereas at high temperatures, the superheated sulfur vapour exists primarily as S₂ molecules. The conversion of S₆, S₇ and S₈ molecules into S₂ molecules requires significant amounts of energy resulting in a gas that heats up significantly slower than is expected based on the normal heat capacity of the mixture. The reaction of S₆, S₇ and S₈ to S₂ is reversible and when the gas is cooled down, the reaction energy is released again.

The present invention splits the sulfur combustion into two portions, namely submerged and vapour phase combustion. The released reaction energy in the latter is used to heat the sulfur vapour and produce S₂ molecules. Due to the reaction of S₆, S₇ and S₈ to S₂ molecules, the vapour has a very high apparent heat capacity and the vapour only increases relatively modestly in temperature to (e.g. to ~700°C instead of the ~2000 °C that would be expected based on conventional heat capacity alone). The process temperature (and hence oxygen addition) is preferably limited to about 700°C to ensure some of the sulfur molecules remain in the S₆, S₇ and S₈ form which prevents temperature spikes in case of process fluctuations. The reaction of sulfur to sulfur dioxide in the gas phase has the additional benefit that significantly less sulfur remains in the gas before it is cooled resulting in smaller equipment for condensing the remaining sulfur.

The reversible reaction of S₆, S₇ and S₈ to S₂ takes place essentially entirely in the vapour phase and the heat exchanger required to remove the majority of the reaction energy (up to 75% of the total sulfur combustion energy) can operate above the sulfur dewpoint and therefore does not need to be designed to handle liquid sulfur. This simplifies the design and allows higher grade energy to be recovered. The remaining sulfur combustion energy is recovered in a sulfur condenser.

It should be clear that although the aforementioned description has focussed on sulfur dioxide production for use in sulfuric acid plants with large capacity, the same process and economic benefits exist for smaller plants and for other applications using sulfur dioxide.

The following Examples have been included to illustrate certain aspects of the invention but should not be construed as limiting in any way.

### Examples

Computer modeling was used to calculate the expected compositions and temperatures of the various gas mixtures involved in using submerged combustion and oxygen to produce sulfur dioxide for a commercial scale SCSA sulfuric acid plant (similar to that shown in Figure 1a). In particular, the relative amounts of sulfur allotropes for n=2 to 8 were considered in this modeling.

Three cases were modeled, the first (Comparative example) being based on the plant and method disclosed in the aforementioned CA3021202 and as depicted in Figures 1a-1c, and the other two cases (Inventive examples 1 and 2) being based on the plant and method of the invention and as depicted in Figure 2. For easy comparison, in each case it was assumed that 100 kg/hr of pure molten sulfur was used as a feedstock and combusted and that pure oxygen was be used in primary combustion (i.e. prior to secondary combustion). The modeling software used was ProMax (available from Bryan Research & Engineering LLC) and the modeling results were verified against literature data (such as provided in the article by James R. West, "Thermodynamic Properties of Sulfur").

Values for the prior art SCSA plant or Comparative example during exemplary operation were obtained and are tabulated in Table 1. Specifically, the temperatures, pressures, mass flows, and compositions of the various streams depicted in Figure 1b (namely sulfur 2, oxygen 3, gas mixtures 5a and 5d, and mixture 7i) were obtained and tabulated. Further, the average number Sₙ of the sulfur allotropes in the various gas mixtures were also determined and tabulated in Table 1. Still further, the heat load or useful energy extracted from sulfur condenser 6 was tabulated.

**Table 1. Comparative example**

| **Stream (as per** **Fig. 1b****)** | | **2** | **3** | **5a** | **7i** | **5d** |
|---|---|---|---|---|---|---|
| **Temperature** | °C | 140 | 25 | 486 | 295 | 295 |
| **Pressure** | bar(g) | 2 | 2 | 1.5 | 1.4 | 1.4 |
| **Mass flow** | Kg/hr | 100 | 82.5 | 1588.8 | 1406.3 | 182.5 |
| **Heat load from sulfur condenser** | | | 205 kW | | | |

| **Composition** | | | | | | |
|---|---|---|---|---|---|---|
| **S₂** | mol% | 0.0 | 0.0 | 3.7 | 0.4 | 0.0 |
| **S₃** | mol% | 0.0 | 0.0 | 0.5 | 0.0 | 0.0 |
| **S₄** | mol% | 0.0 | 0.0 | 0.4 | 0.0 | 0.0 |
| **S₅** | mol% | 0.0 | 0.0 | 3.1 | 1.4 | 0.0 |
| **S₆** | mol% | 0.0 | 0.0 | 21.0 | 23.2 | 0.6 |
| **S₇** | mol% | 0.0 | 0.0 | 21.1 | 18.4 | 0.5 |
| **S₈** | mol% | 100.0 | 0.0 | 22.7 | 56.4 | 1.6 |
| **SO₂** | mol% | 0.0 | 0.0 | 27.4 | 0.2 | 97.0 |
| **O₂** | mol% | 0.0 | 100.0 | 0.0 | 0.0 | 0.0 |
| **S_{n_}average** | | 8.0 | | 6.6 | 7.3 | 7.3 |

With reference to Figure 1b and Table 1 then, pure sulfur 2 and pure oxygen 3 are supplied to submerged combustion reactor 4 in amounts of 100 and 82.5 kg/hr and at temperatures of 25 and 140 °C respectively. 1589 kg/hr of first gas mixture 5a is produced whose composition includes sulfur dioxide and sulfur vapour comprising molecules of sulfur Sₙ in which n ranges from 2 to 8 and at a temperature of 486 °C. This first gas mixture 5a is directed to sulfur condenser 6 from which are output two mixtures, both at 295 °C, namely: 1406 kg/hr of mixture 7i containing condensed liquid sulfur in various allotropic forms and a modest amount of SOz; and 182.5 kg.hr of gas mixture 5d primarily containing SOz (i.e. 97% by mole) and residual sulfur vapour. The former condensed sulfur mixture is returned to submerged combustion reactor 4. The latter, primarily SOz, gas mixture is directed to a secondary combustion chamber as depicted in Figure 1c.

In the secondary combustion, the 182.5 kg/hr gas mixture primarily containing SOz from Figure 1b and 66 kg/hr of pure oxygen are directed to secondary combustion chamber 8 where the residual sulfur vapour in the former is fully combusted to produce 360 kg/hr process gas consisting essentially of sulfur dioxide and oxygen at about 600 °C.

For comparison, the two Inventive examples were based on a similar SCSA to that shown in Figures 1a-1c except that a vapour phase combustion chamber and a heat exchanger had been incorporated and operated in accordance with the invention. Inventive example 1 involved operation with sulfur condensing at a relatively high temperature, while Inventive Example 2 involved operation with sulfur condensing at a relatively low temperature. Again, values for these Inventive examples during exemplary operation were obtained and are tabulated in Tables 2 and 3 below. Here, the temperatures, pressures, mass flows, and compositions of the various streams depicted in Figure 2 (namely sulfur 2, oxygen 3, gas mixtures 5a, 5b, 5c and 5d, and mixture 7ii) were obtained and tabulated. As before, the average number Sₙ of the sulfur allotropes in the various gas mixtures were tabulated. And, the heat loads extracted from each of sulfur condenser 6 and heat exchanger 18 were also tabulated.

**Table 2. Inventive example 1**

| **Stream (as per** **Fig. 2****)** | | **2** | **3 (to 4)** | **5a** | **3 (to 17)** | **5b** | **5c** | **7ii** | **5d** |
|---|---|---|---|---|---|---|---|---|---|
| **Temperature** | °C | 140 | 25 | 486 | 25 | 700 | 450 | 295 | 295 |
| **Pressure** | bar(g) | 2.00 | 2.00 | 1.50 | 2.00 | 1.49 | 1.47 | 1.40 | 1.40 |
| **Mass flow** | Kg/hr | 100 | 29.3 | 575.5 | 53.2 | 628.7 | 628.7 | 446.2 | 182.5 |
| **Heat load from sulfur condenser** | | | | 60 kW | | | | | |
| **Heat load from heat exchanger** | | | | 145 kW | | | | | |

| **Composition** | | | | | | | | | |
|---|---|---|---|---|---|---|---|---|---|
| **S₂** | mol% | 0.0 | 0.0 | 3.7 | 0.0 | 51.3 | 1.6 | 0.4 | 0.0 |
| **S₃** | mol% | 0.0 | 0.0 | 0.5 | 0.0 | 4.0 | 0.2 | 0.0 | 0.0 |
| **S₄** | mol% | 0.0 | 0.0 | 0.4 | 0.0 | 1.3 | 0.2 | 0.0 | 0.0 |
| **S₅** | mol% | 0.0 | 0.0 | 3.1 | 0.0 | 2.3 | 1.7 | 1.4 | 0.0 |
| **S₆** | mol% | 0.0 | 0.0 | 21.0 | 0.0 | 4.4 | 13.0 | 23.2 | 0.6 |
| **S₇** | mol% | 0.0 | 0.0 | 21.1 | 0.0 | 2.8 | 12.7 | 18.4 | 0.5 |
| **S₈** | mol% | 100.0 | 0.0 | 22.7 | 0.0 | 0.9 | 15.9 | 56.4 | 1.6 |
| **SO₂** | mol% | 0.0 | 0.0 | 27.4 | 0.0 | 32.9 | 54.7 | 0.2 | 97.0 |
| **O₂** | mol% | 0.0 | 100.0 | 0.0 | 100.0 | 0.0 | 0.0 | 0.0 | 0.0 |
| **S_{n_}average** | | 8.0 | | 6.6 | | 2.8 | 6.8 | 7.3 | 7.3 |

With reference to Figure 2 and Table 2 then, pure sulfur 2 and pure oxygen 3 are supplied to the submerged combustion reactor 4 in amounts of 100 and 29.3 kg/hr and at temperatures of 25 and 140 °C respectively. Except that less oxygen is supplied at this stage, this is the same as that of the preceding Comparative example. This time, only 576 kg/hr of first gas mixture 5a is produced but with the same relative composition and at the same temperature as that of Comparative example 1. In accordance with the invention, this first gas mixture 5a is directed next to vapour phase combustion chamber 17 and combusted with a further 53.2 kg/hr of pure oxygen at 25 °C (i.e. the same oxygen total of 82.5 kg/hr as in the Comparative example). 629 kg/hr of second gas mixture 5b at 25 °C is output from vapour phase combustion chamber 17 at 700°C and cooled in heat exchanger 18 to produce third gas mixture 5c at 450 °C. Heat energy is recovered in heat exchanger 18 and the composition of second gas mixture 5b is seen to change significantly as it cools to become third gas mixture 5c (the % of SOz and of S allotropes with n > 5 increases, while the % of S allotropes with n = 5 or less decreases). 629 kg/hr of this third gas mixture 5c is then directed to the sulfur condenser 6 and from which two mixtures are once again output, namely mixture 7ii and gas mixture 5d, again both at 295 °C. In a like manner to the Comparative example, the same amount and composition of gas mixture 5d is produced. The other mixture produced 7ii (containing condensed liquid sulfur in various allotropic forms and a modest amount of SOz) and to be returned to submerged combustion reactor 4 has the same relative composition as that of mixture 7i in the Comparative example but much less of it is produced (i.e. 446 kg/hr instead of 1406 kg/hr). The fourth gas mixture 5d, which is essentially identical to that in the Comparative example, is directed to a secondary combustion chamber as depicted in Figure 1c.

Inventive example 2 shows the same inventive process but differs from Inventive example 1 in that the sulfur condenser is operated at a temperature below the sulfur viscosity peak. It also illustrates that the inventive process can be operated at different pressures. Values for Inventive example 2 are tabulated in Table 3 below.

**Table 3. Inventive example 2**

| **Stream (as per** **Fig. 2****)** | | **2** | **3 (to 4)** | **5a** | **3 (to 17)** | **5b** | **5c** | **7ii** | **5d** |
|---|---|---|---|---|---|---|---|---|---|
| **Temperature** | °C | 140 | 25 | 442 | 25 | 700 | 410 | 155 | 155 |
| **Pressure** | bar(g) | 2.00 | 2.00 | 0.50 | 2.00 | 0.49 | 0.47 | 0.45 | 0.45 |
| **Mass flow** | Kg/hr | 100 | 34.3 | 576 | 65.5 | 641.5 | 641.5 | 441.7 | 199.7 |
| **Heat load from sulfur condenser** | | | | 80 kW | | | | | |
| **Heat load from heat exchanger** | | | | 177 kW | | | | | |

| **Composition** | | | | | | | | | |
|---|---|---|---|---|---|---|---|---|---|
| **S₂** | mol% | 0.0 | 0.0 | 2.2 | 0.0 | 55.9 | 0.9 | 0.0 | 0.0 |
| **S₃** | mol% | 0.0 | 0.0 | 0.3 | 0.0 | 3.5 | 0.1 | 0.0 | 0.0 |
| **S₄** | mol% | 0.0 | 0.0 | 0.2 | 0.0 | 0.9 | 0.1 | 0.0 | 0.0 |
| **S₅** | mol% | 0.0 | 0.0 | 2.4 | 0.0 | 1.3 | 1.2 | 0.3 | 0.0 |
| **S₆** | mol% | 0.0 | 0.0 | 19.5 | 0.0 | 2.0 | 11.0 | 14.7 | 0.0 |
| **S₇** | mol% | 0.0 | 0.0 | 19.0 | 0.0 | 1.0 | 10.2 | 7.2 | 0.0 |
| **S₈** | mol% | 100.0 | 0.0 | 24.7 | 0.0 | 0.3 | 15.4 | 77.6 | 0.0 |
| **SO₂** | mol% | 0.0 | 0.0 | 31.6 | 0.0 | 34.9 | 60.9 | 0.2 | 99.8 |
| **O₂** | mol% | 0.0 | 100.0 | 0.0 | 100.0 | 0.0 | 0.0 | 0.0 | 0.0 |
| **S_{n_}average** | | 8.0 | | 6.8 | | 2.4 | 6.9 | 7.6 | 7.6 |

It is apparent from this modeling that the sulfur condenser required in the inventive embodiments of Inventive examples 1 and 2 can be sized much smaller than that of the Comparative example. The ratio of mass supplied to the sulfur condenser in Figure 2 compared to that of Figure 1 is 628/1589 or 0.40. Further, the amount of sulfur condensed in the Comparative example embodiment is 99.8% of 1406 kg/hr, which is substantially more than 10 times the amount of molten sulfur supplied to the submerged combustion reaction. However, the amount of sulfur condensed in the Inventive example 1 embodiment is 99.8% of 446 kg/hr, which is substantially less than 10 times the amount of molten sulfur supplied to the submerged combustion reaction.

As mentioned, the calculated heat loads (i.e. the amount of energy that is removed from the process) from sulfur condenser 6 and from the heat exchanger 18 are shown in Tables 1 through 3. The total heat load in Inventive example 1 is the same as that in the Comparative Example, but importantly in this inventive process, more than 70% of that total heat load can be recovered in heat exchanger 18 which operates at a temperature above 400°C and less than 30% of the heat load is recovered from sulfur condenser 6 at much lower temperature. The energy recovered from heat exchanger 18 is recovered at higher temperature and has more economical value and can be used for high pressure (e.g. 60 barg) steam production and/or steam superheating. No condensation occurs in heat exchanger 18 and thus no viscous liquid needs to be dealt with to recover this energy.

The total heat load shown in Table 3 for Inventive example 2 is higher compared to the other examples as due to the lower condensing temperature in the sulfur condenser there is less sulfur vapour leaving in stream 5d and therefore more of the molten sulfur in stream 1 is converted into sulfur dioxide. However, as for Inventive example 1, approximately 70% of the total heat load can be recovered in heat exchanger 18.

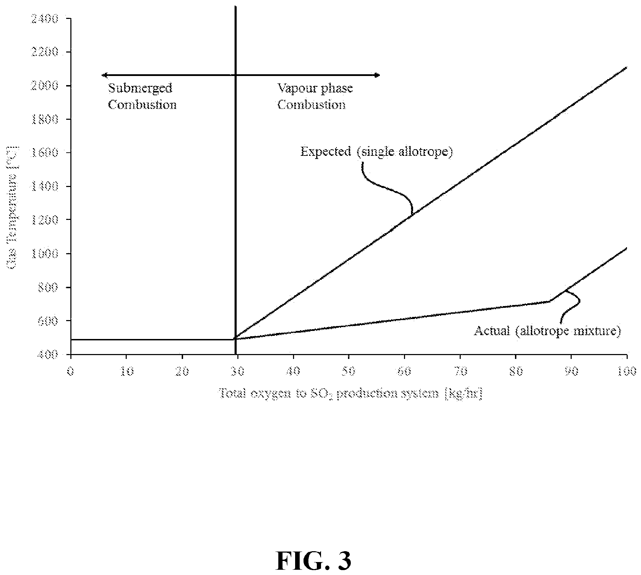

For illustrative purposes, Figure 3 compares the actual temperature of the gas mixture during the submerged and vapour phase combusting steps in Inventive example 1 to the expected temperature during these steps if a single sulfur allotrope were assumed to be present in the mixture throughout which is normal for most gases. It is evident from Figure 3 that the presence of the other sulfur allotropes results in an enormous difference between the actual gas temperature and the temperatures based on the single allotrope assumption during this vapour phase combusting step.

From the above Examples, it is clearly apparent that the invention allows for a substantial reduction in the size, complexity, and cost of the sulfur condensing equipment used in this process and also for a significant improvement in high temperature energy recovery.

## Claims

1. A system for the production of sulfur dioxide gas comprising:
a submerged combustion reactor for the combustion of molten sulfur to sulfur dioxide comprising an inlet for a supply of molten sulfur, an inlet for a supply of oxygen at ≥ 90% purity by volume, an inlet for condenser sulfur, and an outlet;
a vapour phase combustion chamber for the combustion of sulfur vapour to sulfur dioxide comprising an inlet connected to the outlet of the submerged combustion reactor, an inlet for a supply of oxygen at ≥ 90% purity by volume, and an outlet;
an apparatus for cooling a gas and for condensing sulfur vapor into liquid sulfur comprising an inlet connected to the outlet of the vapour phase combustion chamber, an outlet for liquid sulfur connected to the condensed sulfur inlet of the submerged combustion reactor, and an outlet for a gas mixture comprising sulfur dioxide and residual sulfur vapour.

2. The system of claim 1 wherein the apparatus for cooling a gas and for condensing sulfur vapour into liquid sulfur comprises:
a heat exchanger for cooling a gas comprising the inlet connected to the outlet of the vapour phase combustion chamber, and an outlet; and
a sulfur condenser for condensing sulfur vapour into liquid sulfur comprising an inlet connected to the outlet of the heat exchanger, the outlet for liquid sulfur connected to the condensed sulfur inlet of the submerged combustion reactor, and the outlet for a gas mixture comprising sulfur dioxide and residual sulfur vapour.

3. The system of claim 1 wherein the sulfur condenser is sized to condense less than 10 times the mass of molten sulfur supplied to the submerged combustion reactor.

4. A sulfuric acid plant comprising:
the sulfur dioxide production system of claim 1;
a secondary combustion chamber for the combustion of residual sulfur vapour to sulfur dioxide comprising an inlet connected to the outlet of the sulfur condenser for the gas mixture, an inlet for an oxygen containing gas, and an outlet for process gas consisting essentially of sulfur dioxide and oxygen;
a contact apparatus for converting sulfur dioxide to sulfur trioxide comprising an inlet connected to the process gas outlet of the secondary combustion chamber and an outlet for sulfur trioxide; and
an absorption system for converting sulfur trioxide to sulfuric acid comprising an inlet connected to the sulfur trioxide outlet of the contact apparatus, and an outlet for sulfuric acid.

5. The sulfuric acid plant of claim 4 wherein the contact apparatus is a tubular reactor cooled by molten salt.

6. The sulfuric acid plant of claim 4 wherein the submerged combustion reactor, the vapour phase combustion chamber, and the secondary combustion chamber share a common supply of oxygen at ≥ 90% purity by volume.

7. The sulfuric acid plant of claim 4 wherein the secondary combustion chamber comprises an inlet for recycle gas from the absorption system wherein the recycle gas comprises sulfur dioxide and oxygen.

8. The sulfuric acid plant of claim 4 wherein the sulfuric acid plant is a single contact, single absorption sulfuric acid plant.

9. A method for producing sulfur dioxide comprising:
combusting molten sulfur with oxygen at > 90% purity by volume using submerged combustion to produce a first gas mixture comprising sulfur dioxide and sulfur vapour comprising molecules of sulfur Sₙ wherein n≥2;
vapour phase combusting the sulfur vapour in the first gas mixture with oxygen or oxygen enriched air to produce a second gas mixture comprising sulfur dioxide and sulfur vapour wherein the concentrations of sulfur dioxide and sulfur vapour in the second gas mixture are greater and less respectively than the concentrations in the first gas mixture;
cooling the second gas mixture to produce a cooler third gas mixture comprising sulfur dioxide and sulfur vapour; and
condensing sulfur vapour into liquid sulfur from the third gas mixture to produce a fourth gas mixture comprising sulfur dioxide and residual sulfur vapour;
**characterized in that** the average number n_{average} of the sulfur atoms in the sulfur molecules in the second gas mixture is at least 20% lower than the n_{average} of the sulfur atoms in the sulfur molecules in the first gas mixture.

10. The method of claim 9 **characterized in that** the average number n_{average} of the sulfur atoms in the sulfur molecules in the second gas mixture is more than 50% lower than the n_{average} of the sulfur atoms in the sulfur molecules in the first gas mixture.

11. The method of claim 9 wherein the cooling is performed at a temperature above the dewpoint of sulfur and the cooling removes more than 50% of the energy released during the combustion of sulfur in the submerged combustion and vapour phase combusting steps.

12. The method of claim 9 wherein 30% to 50% of the total oxygen combusted in the submerged and vapour phase combusting steps is combusted in the submerged combusting step and 50% to 70% of the total oxygen is combusted in the vapour phase combusting step.

13. The method of claim 9 wherein the average number of sulfur atoms of the Sₙ molecules for all n ≥ 2 in the first gas mixture is in the range from 6.4 to 7.0;
and/or wherein the average number of sulfur atoms of the Sₙ molecules for all n ≥ 2 in the second gas mixture is in the range from 2.1 to 3;
and/or wherein the average number of sulfur atoms of the Sₙ molecules for all n ≥ 2 in the third gas mixture is in the range from 6.4 to 7.0.

14. The method of claim 9 wherein the temperature of the first gas mixture is in the range from 440 to 500 °C;
and/or wherein the temperature of the second gas mixture is in the range from 650 to 700 °C;
and/or wherein the temperature of the third gas mixture is in the range from 400 to 450 °C.

15. A method for producing sulfuric acid in a sulfuric acid plant comprising:
producing sulfur dioxide according to the method of claim 9;
combusting the residual sulfur vapour in the fourth gas mixture with an oxygen containing gas using secondary combustion to produce process gas consisting essentially of sulfur dioxide and oxygen;
converting sulfur dioxide in the process gas to sulfur trioxide using a contact apparatus containing a conversion catalyst; and
absorbing the sulfur trioxide using an absorption apparatus to produce sulfuric acid.

## Patentansprüche

1. System zur Herstellung von Schwefeldioxidgas, umfassend:
einen untergetauchten Verbrennungsreaktor für die Verbrennung von geschmolzenem Schwefel zu Schwefeldioxid, umfassend einen Einlass für die Zufuhr von geschmolzenem Schwefel, einen Einlass für die Zufuhr von Sauerstoff mit einer Reinheit von ≥ 90 Vol.-%, einen Einlass für kondensierten Schwefel und einen Auslass;
eine Dampfphasenverbrennungskammer für die Verbrennung von Schwefeldampf zu Schwefeldioxid, umfassend einen mit dem Auslass des untergetauchten Verbrennungsreaktors verbundenen Einlass, einen Einlass für eine Zufuhr von Sauerstoff mit einer Reinheit von ≥ 90 Vol.-% und einen Auslass;
eine Vorrichtung zum Kühlen eines Gases und zum Kondensieren von Schwefeldampf zu flüssigem Schwefel, umfassend einen mit dem Auslass der Dampfphasenverbrennungskammer verbundenen Einlass, einen mit dem Einlass für kondensierten Schwefel des untergetauchten Verbrennungsreaktors verbundenen Auslass für flüssigen Schwefel und einen Auslass für ein Schwefeldioxid und verbleibenden Schwefeldampf umfassendes Gasgemisch.

2. System nach Anspruch 1, wobei die Vorrichtung zum Kühlen eines Gases und zum Kondensieren von Schwefeldampf zu flüssigem Schwefel Folgendes umfasst:
einen Wärmetauscher zum Kühlen eines Gases, umfassend den mit dem Auslass der Dampfphasenverbrennungskammer verbundenen Einlass, und einen Auslass; und
einen Schwefelkondensator zum Kondensieren von Schwefeldampf zu flüssigem Schwefel, umfassend einen mit dem Auslass des Wärmetauschers verbundenen Einlass, den mit dem Einlass für kondensierten Schwefel des untergetauchten Verbrennungsreaktors verbundenen Auslass für flüssigen Schwefel und den Auslass für ein Schwefeldioxid und verbleibenden Schwefeldampf umfassendes Gasgemisch.

3. System nach Anspruch 1, wobei der Schwefelkondensator so bemessen ist, dass er weniger als das Zehnfache der Masse an geschmolzenem Schwefel kondensiert, die dem untergetauchten Verbrennungsreaktors zugeführt wird.

4. Eine Schwefelsäureanlage, umfassend:
das System zur Herstellung von Schwefeldioxidgas nach Anspruch 1;
eine sekundäre Verbrennungskammer für die Verbrennung von verbleibendem Schwefeldampf zu Schwefeldioxid, umfassend einen mit dem Auslass des Schwefelkondensators für das Gasgemisch verbundenen Einlass, einen Einlass für ein sauerstoffhaltiges Gas und einen Auslass für ein im Wesentlichen aus Schwefeldioxid und Sauerstoff bestehendes Prozessgas;
eine Kontaktvorrichtung zur Umwandlung von Schwefeldioxid in Schwefeltrioxid, umfassend einen mit dem Prozessgasauslass der sekundären Verbrennungskammer verbundenen Einlass und einen Auslass für Schwefeltrioxid; und
ein Absorptionssystem zur Umwandlung von Schwefeltrioxid in Schwefelsäure, umfassend einen mit dem Auslass für Schwefeltrioxid der Kontaktvorrichtung verbundenen Einlass, und einen Auslass für Schwefelsäure.

5. Schwefelsäureanlage nach Anspruch 4, wobei die Kontaktvorrichtung ein mit geschmolzenem Salz gekühlter Rohrreaktor ist.

6. Schwefelsäureanlage nach Anspruch 4, wobei der untergetauchte Verbrennungsreaktor, die Dampfphasenverbrennungskammer und die sekundäre Verbrennungskammer eine gemeinsame Sauerstoffversorgung mit einer Reinheit von ≥ 90 Vol.-% aufweisen.

7. Schwefelsäureanlage nach Anspruch 4, wobei die sekundäre Verbrennungskammer einen Einlass für Rückführgas aus dem Absorptionssystem umfasst, wobei das Rückführgas Schwefeldioxid und Sauerstoff umfasst.

8. Schwefelsäureanlage nach Anspruch 4, wobei die Schwefelsäureanlage eine Einfachkontakt-, Einfachabsorptions-Schwefelsäureanlage ist.

9. Verfahren zur Herstellung von Schwefeldioxid umfassend:
Verbrennen von geschmolzenem Schwefel mit Sauerstoff einer Reinheit von > 90 Vol.-% unter Anwendung untergetauchter Verbrennung, um ein erstes Gasgemisch zu erzeugen, das Schwefeldioxid und Schwefeldampf umfasst, der Moleküle von Schwefel Sₙ umfasst, wobei n≥2;
Dampfphasenverbrennen des Schwefeldampfes im ersten Gasgemisch mit Sauerstoff oder sauerstoffangereicherter Luft, um ein zweites Gasgemisch zu erzeugen, das Schwefeldioxid und Schwefeldampf umfasst, wobei die Konzentrationen von Schwefeldioxid und Schwefeldampf im zweiten Gasgemisch größer bzw. kleiner sind als die Konzentrationen im ersten Gasgemisch;
Abkühlen des zweiten Gasgemisches, um ein kühleres drittes Gasgemisch umfassend Schwefeldioxid und Schwefeldampf zu erzeugen; und
Kondensieren von Schwefeldampf zu flüssigem Schwefel aus dem dritten Gasgemisch, um ein viertes Gasgemisch umfassend Schwefeldioxid und verbleibenden Schwefeldampf zu erzeugen;
**dadurch gekennzeichnet, dass** der durchschnittliche Zahlenmittelwert n_{Durchschnitt} der Schwefelatome in den Schwefelmolekülen im zweiten Gasgemisch mindestens 20% niedriger ist als der n_{Durchschnitt} der Schwefelatome in den Schwefelmolekülen im ersten Gasgemisch.

10. Verfahren nach Anspruch 9, **dadurch gekennzeichnet, dass** der durchschnittliche Zahlenmittelwert n_{Durchschnitt} der Schwefelatome in den Schwefelmolekülen im zweiten Gasgemisch um mehr als 50 % geringer ist als n_{Durchschnitt} der Schwefelatome in den Schwefelmolekülen im ersten Gasgemisch.

11. Verfahren nach Anspruch 9, wobei das Kühlen bei einer Temperatur oberhalb des Taupunkts von Schwefel durchgeführt wird und das Kühlen mehr als 50% der Energie entfernt, die während des Verbrennens von Schwefel in den Schritten der untergetauchten Verbrennung und der Dampfphasenverbrennung freigesetzt wird.

12. Verfahren nach Anspruch 9, wobei 30 % bis 50 % des gesamten Sauerstoffs, der in den Schritten der untergetauchten Verbrennung und Dampfphasenverbrennung verbrannt wird, im Schritt der untergetauchten Verbrennung verbrannt werden und 50 % bis 70 % des gesamten Sauerstoffs im Schritt der Dampfphasenverbrennung verbrannt werden.

13. Verfahren nach Anspruch 9, wobei die durchschnittliche Anzahl der Schwefelatome der Sₙ Moleküle für alle n ≥ 2 im ersten Gasgemisch im Bereich von 6,4 bis 7,0 liegt;
und/oder wobei die durchschnittliche Anzahl der Schwefelatome der Sₙ Moleküle für alle n ≥ 2 im zweiten Gasgemisch im Bereich von 2,1 bis 3 liegt;
und/oder wobei die durchschnittliche Anzahl der Schwefelatome der Sₙ Moleküle für alle n ≥ 2 im dritten Gasgemisch im Bereich von 6,4 bis 7,0 liegt.

14. Verfahren nach Anspruch 9, wobei die Temperatur des ersten Gasgemisches im Bereich von 440 bis 500 °C liegt;
und/oder wobei die Temperatur des zweiten Gasgemisches im Bereich von 650 bis 700 °C liegt;
und/oder wobei die Temperatur des dritten Gasgemischs im Bereich von 400 bis 450 °C liegt.

15. Verfahren zur Herstellung von Schwefelsäure in einer Schwefelsäureanlage umfassend:
Herstellen von Schwefeldioxid nach dem Verfahren des Anspruchs 9;
Verbrennung des verbleibenden Schwefeldampfes im vierten Gasgemisch mit einem sauerstoffhaltigen Gas unter Anwendung einer sekundären Verbrennung, um ein Prozessgas zu erzeugen, das im Wesentlichen aus Schwefeldioxid und Sauerstoff besteht;
Umwandeln des Schwefeldioxids in dem Prozessgas in Schwefeltrioxid unter Anwendung einer Kontaktvorrichtung, die einen Umwandlungskatalysator enthält; und
Absorbieren des Schwefeltrioxids unter Verwendung einer Absorptionsvorrichtung zur Herstellung von Schwefelsäure.

## Revendications

1. Système de production de gaz de dioxyde de soufre comprenant:
un réacteur de combustion immergé pour la combustion de soufre fondu en dioxyde de soufre, comprenant une entrée pour l'alimentation en soufre fondu, une entrée pour l'alimentation en oxygène d'une pureté ≥ 90 % en volume, une entrée pour le soufre du condensateur et une sortie;
une chambre de combustion en phase de vapeur pour la combustion de la vapeur de soufre en dioxyde de soufre, comprenant une entrée reliée à la sortie du réacteur de combustion immergé, une entrée pour une alimentation en oxygène d'une pureté ≥ 90 % en volume, et une sortie;
un appareil pour refroidir un gaz et pour condenser la vapeur de soufre en soufre liquide, comprenant une entrée reliée à la sortie de la chambre de combustion en phase de vapeur, une sortie pour le soufre liquide reliée à l'entrée de soufre condensé du réacteur de combustion immergé, et une sortie pour un mélange de gaz comprenant le dioxyde de soufre et la vapeur de soufre résiduelle.

2. Système selon la revendication 1, dans lequel l'appareil pour refroidir un gaz et pour condenser une vapeur de soufre en soufre liquide comprenant:
un échangeur de chaleur pour refroidir un gaz comprenant l'entrée reliée à la sortie de la chambre de combustion en phase de vapeur, et une sortie; et
un condenseur de soufre pour condenser la vapeur de soufre en soufre liquide comprenant une entrée reliée à la sortie de l'échangeur de chaleur, la sortie de soufre liquide reliée à l'entrée de soufre condensé du réacteur de combustion immergé, et la sortie d'un mélange de gaz comprenant le dioxyde de soufre et la vapeur de soufre résiduelle.

3. Système selon la revendication 1, dans lequel le condenseur de soufre est dimensionné pour condenser moins de 10 fois la masse de soufre fondu fournie au réacteur de combustion immergé.

4. Usine d'acide sulfurique comprenant:
le système de production de dioxyde de soufre selon la revendication 1;
une chambre de combustion secondaire pour la combustion de la vapeur de soufre résiduelle en dioxyde de soufre, comprenant une entrée reliée à la sortie du condenseur de soufre pour le mélange de gaz, une entrée pour un gaz contenant de l'oxygène et une sortie pour le gaz de traitement composé essentiellement de dioxyde de soufre et d'oxygène;
un appareil de contact pour convertir le dioxyde de soufre en trioxyde de soufre, comprenant une entrée reliée à la sortie de gaz de traitement de la chambre de combustion secondaire et une sortie pour le trioxyde de soufre; et
un système d'absorption pour convertir le trioxyde de soufre en acide sulfurique, comprenant une entrée reliée à la sortie de trioxyde de soufre de l'appareil de contact, et une sortie pour l'acide sulfurique.

5. Usine d'acide sulfurique selon la revendication 4, dans laquelle l'appareil de contact est un réacteur tubulaire refroidi par du sel fondu.

6. Usine d'acide sulfurique selon la revendication 4, dans laquelle le réacteur de combustion immergé, la chambre de combustion en phase de vapeur et la chambre de combustion secondaire partagent une alimentation commune en oxygène d'une pureté ≥ 90 % en volume.

7. Usine d'acide sulfurique selon la revendication 4, dans laquelle la chambre de combustion secondaire comprend une entrée pour le gaz recyclé provenant du système d'absorption, le gaz recyclé comprenant du dioxyde de soufre et de l'oxygène.

8. Usine d'acide sulfurique selon la revendication 4, dans laquelle l'usine d'acide sulfurique est une usine d'acide sulfurique à contact unique et à absorption unique.

9. Procédé de production de dioxyde de soufre comprenant:
la combustion de soufre fondu avec de l'oxygène à une pureté > 90 % en volume, par combustion immergée, pour produire un premier mélange de gaz comprenant le dioxyde de soufre et la vapeur de soufre comprenant des molécules de soufre Sₙ, n ≥ 2 ;
la combustion en phase de vapeur de soufre dans le premier mélange de gaz avec de l'oxygène ou de l'air enrichi en oxygène pour produire un second mélange de gaz comprenant le dioxyde de soufre et la vapeur de soufre, dans lequel les concentrations de dioxyde de soufre et de vapeur de soufre dans le second mélange de gaz sont respectivement supérieures et inférieures aux concentrations dans le premier mélange de gaz;
le refroidissement du deuxième mélange de gaz pour produire un troisième mélange de gaz plus froid comprenant le dioxyde de soufre et la vapeur de soufre; et
la condensation de la vapeur de soufre en soufre liquide à partir du troisième mélange de gaz pour produire un quatrième mélange de gaz comprenant le dioxyde de soufre et la vapeur de soufre résiduelle;
**caractérisé en ce que** le nombre moyen n_{average} d'atomes de soufre dans les molécules de soufre du deuxième mélange de gaz est inférieur d'au moins 20 % au n_{average} des atomes de soufre dans les molécules de soufre du premier mélange de gaz.

10. Procédé selon la revendication 9, **caractérisé en ce que** le nombre moyen n_{average} des atomes de soufre dans les molécules de soufre du deuxième mélange de gaz est inférieur de plus de 50 % au n_{average} des atomes de soufre dans les molécules de soufre du premier mélange de gaz.

11. Procédé selon la revendication 9, dans lequel le refroidissement est effectué à une température supérieure au point de rosée du soufre et le refroidissement élimine plus de 50 % de l'énergie libérée lors de la combustion du soufre dans les étapes de combustion immergée et de combustion en phase de vapeur.

12. Procédé selon la revendication 9, dans lequel de 30 % à 50 % de l'oxygène total brûlé dans les étapes de combustion immergée et en phase de vapeur est brûlé dans l'étape de combustion en phase immergée et de 50 % à 70 % de l'oxygène total est brûlé dans l'étape de combustion en phase de vapeur.

13. Procédé selon la revendication 9, dans lequel le nombre moyen d'atomes de soufre des molécules de Sₙ pour tous les n ≥ 2 dans le premier mélange de gaz se trouve dans la plage allant de 6,4 à 7,0;
et/ou dans lequel le nombre moyen d'atomes de soufre des molécules Sₙ pour tous les n ≥ 2 dans le deuxième mélange de gaz se trouve dans la plage allant de 2,1 à 3;
et/ou dans lequel le nombre moyen d'atomes de soufre des molécules Sₙ pour tous les n ≥ 2 dans le troisième mélange de gaz se trouve dans la plage allant de 6,4 à 7,0.

14. Procédé selon la revendication 9, dans lequel la température du premier mélange de gaz se trouve dans la plage allant de 440 à 500 °C;
et/ou dans lequel la température du deuxième mélange de gaz se trouve dans la plage allant de 650 à 700 °C;
et/ou dans lequel la température du troisième mélange de gaz se trouve dans la plage allant de 400 à 450 °C.

15. Procédé de production d'acide sulfurique dans une usine d'acide sulfurique comprenant:
la production de dioxyde de soufre selon le procédé de la revendication 9;
la combustion de la vapeur de soufre résiduelle dans le quatrième mélange de gaz avec un gaz contenant de l'oxygène par combustion secondaire pour produire un gaz de traitement composé essentiellement de dioxyde de soufre et d'oxygène;
la conversion du dioxyde de soufre présent dans le gaz de traitement en trioxyde de soufre à l'aide d'un appareil de contact contenant un catalyseur de conversion; et
l'absorption du trioxyde de soufre à l'aide d'un appareil d'absorption pour produire de l'acide sulfurique.
